# FASCICULE DE BREVET EUROPEEN

(11) **EP 3 054 713 B1**
(45) Date de publication et mention de la délivrance du brevet: **18.10.2017**
(21) Numéro de dépôt: 16162888.8
(22) Date de dépôt: 19.04.2002
(51) Int. Cl.: H04W 8/20

(54) **PROCÉDÉ DE COMMUNICATION AVEC PLUSIEURS TÉLÉPHONES ET TRANSFERT D'ABONNEMENT**
KOMMUNIKATIONSVERFAHREN MIT MEHREREN TELEFONEN UND ABONNEMENT-ÜBERTRAGUNG
METHOD FOR COMMUNICATION WITH SEVERAL TELEPHONES AND TRANSFER OF SUBSCRIPTION

(30) Priorité: 25.04.2001 FR 0105560
(43) Date de publication de la demande: 10.08.2016
(62) Demande divisionnaire de: 02290997.2
(73) Titulaire: Apple Inc., Cupertino, CA 95014-2094 (US)
(72) Inventeur: RIEUL, Francois, 78100 Saint Germain en Laye (FR); FOND, Michel, 92410 Ville D'Avray (FR)
(74) Mandataire: Lang, Johannes

(56) Documents cités:
- EP-A2- 0 378 450
- WO-A-00/31994
- WO-A1-99/59360

## Description

L'invention concerne la radiotéléphonie cellulaire et les communications assurées au moyen de terminaux, dits portables ou mobiles, de radiotéléphonie cellulaire. Plus précisément, l'invention concerne les terminaux équipés d'émetteur/récepteur de liaison à courte portée de type Bluetooth. Plus précisément encore, l'invention concerne l'utilisation de deux terminaux de radiotéléphonie cellulaire pourvus d'un émetteur/récepteur de liaison à courte portée.

On rappellera que les données de fonctionnement d'un terminal de radiotéléphonie cellulaire, c'est-à-dire les données qui lui permettent de prendre une ligne et d'assurer une communication, sont stockées dans une carte à puce appelée carte SIM fournie par l'opérateur téléphonique à la souscription de l'abonnement. Un autre exemple dans le document D1: WO99/59360. L'objet de l'invention est d'assurer de façon particulière et naturellement avantageuse des communications de radiotéléphonie cellulaire à l'aide au moins de deux terminaux téléphoniques de type Bluetooth et chacun pourvu de données de fonctionnement propres.

Pour bien fixer les idées et à titre d'exemple, on songe ici à un premier terminal équipant par exemple un véhicule automobile et à un second terminal qui serait le terminal personnel du conducteur du véhicule.

L'invention concerne ainsi un procédé de communication de radiotéléphonie cellulaire à l'aide de deux équipements téléphoniques, au moins pouvant être reliés entre eux par radio à courte portée et comportant des moyens audio et des moyens de radiotéléphonie et étant pourvu de données de fonctionnement, dans lequel, après liaison radio de deux équipements, un premier équipement transmet au deuxième ses données de fonctionnement pour que les communications soient assurées au moyen du deuxième équipement et avec les données de fonctionnement du premier.

Le premier équipement est prioritaire et substitue son abonnement à celui du deuxième équipement. Grossièrement, et en d'autres termes, il y a transfert d'abonnement, celui du deuxième équipement, par exemple celui du véhicule, étant coupé.

Si les données de fonctionnement du deuxième équipement sont particulières, c'est-à-dire si, par exemple, des correspondants ne peuvent être appelés qu'avec ces données de fonctionnement, les données de fonctionnement pouvent être réaffectées à leurs équipements respectifs en cas de tentative de communication avec un correspondant uniquement accessible avec les données de fonctionnement du deuxième équipement.

Dans ce cas, et de préférence, le transfert des données de fonctionnement d'un équipement à l'autre est contrôlé en fonction d'un répertoire de numéros de téléphone, avantageusement, par des programmes du deuxième équipement.

Les données de fonctionnement du deuxième équipement sont particulières si, par exemple, elles correspondent à un opérateur privé de mise en communication avec un centre de maintenance, un centre de mise à jour, un centre d'assistance ou tout autre centre de prestation de services pouvant intervenir sur le calculateur de bord d'un véhicule automobile, dans le cas, déjà considéré, où le deuxième équipement est installé dans une planche de bord de véhicule.

Alors, dans ce cas, le transfert des données de fonctionnement d'un équipement à l'autre peut aussi être contrôlé en fonction d'un répertoire de fonctions.

L'invention sera mieux comprise à l'aide de la description suivante, en référence au dessin annexé, sur lequel :

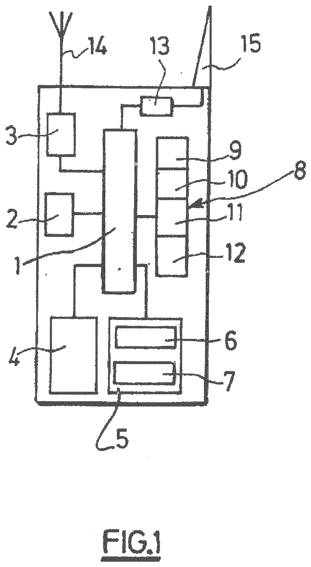

la figure 1 est un schéma par blocs de l'un des deux équipements téléphoniques de l'invention et

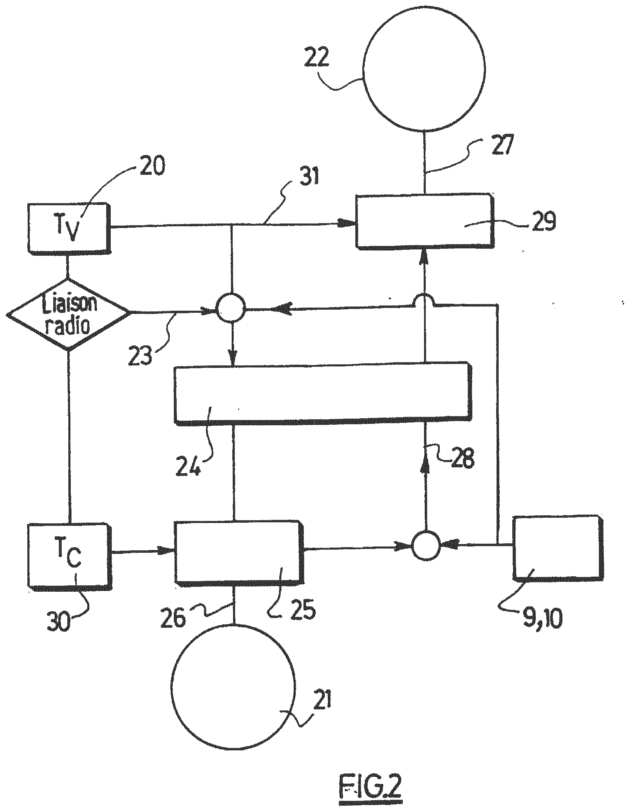

la figure 2 est l'organigramme des communications possibles avec les équipements de l'invention.

Les équipements de l'invention sont des terminaux de radiotéléphonie cellulaire qui comportent, chacun, autour d'un microprocesseur 1 et reliés à lui, une carte à puce SIM de fonctionnement 2, un émetteur/récepteur 3, ici de type Bluetooth, avec son antenne 14, une interface homme-machine comprenant un clavier 4, un ensemble audio 5, avec un microphone 6 et un haut-parleur 7, une mémoire 8 de stockage de données en l'espèce, pour l'un des deux terminaux, un répertoire 9 de numéros de téléphone, un répertoire de fonctions 10, des données 11 de fonctionnement de la carte SIM d'un autre terminal téléphonique et des programmes 12, agencés pour se substituer aux moyens radio et pour fonctionner en relais audio pour un autre terminal téléphonique, un bloc radio 13 et son antenne 15.

On vient en fait de décrire le terminal Tv approprié pour être installé dans une planche de bord d'un véhicule automobile. L'autre terminal Tc, par exemple celui de son propriétaire ou conducteur, est un terminal mobile classique équipé aussi d'un émetteur/récepteur radio à courte portée et dont la mémoire de stockage ne comporte a priori, des moyens énumérés ci-dessus, que le répertoire de numéros de téléphone.

Le terminal Tv est équipé d'une carte SIM 2 qui correspond à un opérateur privé de mise en communication avec un centre de maintenance, un centre de mise à jour, un centre d'assistance ou tout autre centre de prestation de services pouvant intervenir sur le calculateur de bord du véhicule associé.

Soient donc le terminal de voiture Tv 20 et le terminal personnel Tc 30 pour assurer des communications téléphoniques à travers le réseau cellulaire " public " Rp 21, au moyen de deux terminaux, et le réseau particulier Rv 22, au moyen du seul abonnement du terminal Tv 20.

Après que le propriétaire du terminal Tc 30 soit entré dans la voiture, les deux terminaux entrent en liaison radio 23 et les programmes 12 du terminal Tv 20 procèdent au transfert 24 d'abonnement dans le terminal Tv 20, en coupant l'abonnement du terminal Tv 20 et en y substituant celui du terminal prioritaire Tc 30, par transmission des données 11 d'abonnement et donc de fonctionnement de la carte SIM 2 du terminal Tc 30 dans la mémoire 8 du terminal Tv 20. Alors, les communications 26 à travers le réseau Rp 21 sont assurées 25 à l'aide de l'ensemble audio 5 et du bloc radio 13 du terminal Tv 20 et de l'abonnement du terminal Tc 30.

S'il s'agit d'assurer une communication 27 à travers le réseau Rv 22, impossible avec l'abonnement du terminal Tc 30, les abonnements doivent être réaffectés à leurs terminaux respectifs, surtout pour que les données de fonctionnement du terminal Tv 20 puissent être mises en oeuvre. Il est alors procédé, toujours à l'aide des programmes 12 et sous le contrôle du répertoire de numéros 9 de la mémoire 8 du terminal Tv 20, au transfert des abonnements 28, pour que le correspondant souhaité puisse être appelé (31) à l'aide du terminal Tv 20, avec ses moyens audio et radio et son abonnement (29).

Naturellement, la réaffectation des abonnements peut aussi être directement contrôlée, parallèlement au répertoire de numéros 9, par le répertoire de fonctions 10 du terminal.

Dans le cas où, pour continuer de considérer l'exemple du véhicule automobile, il y aurait plusieurs terminaux portables en liaison radio avec le terminal du véhicule, il serait facile de leur attribuer des rangs hiérarchisés de priorité d'accès au terminal du véhicule, pour que le transfert d'abonnement soit effectué selon cet ordre de priorité.

### Exemples supplémentaires :

1. Procédé de communication de radiotéléphonie cellulaire à l'aide de deux équipements téléphoniques (20, 30), au moins, pouvant être reliés entre eux par radio à courte portée (3, 14) et comportant des moyens audio (5) et des moyens de radiotéléphonie (13, 15) et étant pourvus de données de fonctionnement (2), dans lequel, après liaison radio (23) des deux équipements (20, 30), un premier équipement (30) transmet (24) au deuxième (20) ses données de fonctionnement pour que les communications soient assurées (25) au moyen du deuxième équipement et avec les données de fonctionnement du premier.
2. Procédé selon le exemple 1, dans lequel, si les données de fonctionnement (2) du deuxième équipement (20) sont particulières, les données de fonctionnement sont réaffectées (28) à leurs équipements respectifs (20, 30) en cas de tentative de communication avec un correspondant uniquement accessible avec les données de fonctionnement (2) du deuxième équipement (20).
3. Procédé selon l'une des exemples 1 et 2, dans lequel le transfert (24) des données de fonctionnement d'un équipement à l'autre est contrôlé en fonction d'un répertoire de numéros de téléphone (9).
4. Procédé selon l'une des exemples 1 et 3, dans lequel le transfert de données de fonctionnement (24) est contrôlé par un répertoire de fonctions (10).
5. Procédé selon l'une des exemples 3 et 4, dans lequel le transfert de données de fonctionnement (24) s'effectue par des programmes (12) du deuxième équipement (20).

## Revendications

1. Appareil de communication (20) configuré pour communiquer avec un appareil externe (30) par une liaison radio à courte portée (23) et comprenant un terminal de radiotéléphonie cellulaire, l'appareil de communication (20) comprenant:
une carte de fonctionnement (2) configurée pour stocker des premières données de fonctionnement pour l'appareil de communication (20),
une mémoire (8) configurée pour stocker des secondes données de fonctionnement reçues de l'appareil externe (30) par la liaison radio à courte portée (23) ; et
une antenne (15) configurée pour communiquer avec un réseau (21) en utilisant les secondes données de fonctionnement stockées dans la mémoire (8), dans lequel l'appareil de communication (20) est configuré pour réallouer les secondes données de fonctionnement à l'appareil externe (30) en cas de tentative de communication avec un correspondant uniquement accessible avec les premières données de fonctionnement de l'appareil de communication (20).

2. L'appareil de communication selon la revendication 1, dans lequel la liaison radio à courte portée (23) comprend une liaison Bluetooth.

3. L'appareil de communication selon l'une quelconque des revendications précédentes, dans lequel l'appareil de communication (20) est installé dans un véhicule automobile.

4. L'appareil de communication selon l'une quelconque des revendications précédentes, dans lequel la carte de fonctionnement (2) comprend une carte SIM.

5. L'appareil de communication selon l'une quelconque des revendications précédentes, comprenant en outre :
une antenne supplémentaire (14) configurée pour recevoir les secondes données de fonctionnement de l'appareil externe (30) par la liaison radio à courte portée(23).

6. L'appareil de communication selon l'une quelconque des revendications précédentes, dans lequel le réseau (21) comprend un réseau de téléphonie cellulaire.

7. L'appareil de communication selon l'une quelconque des revendications précédentes, dans lequel le correspondant uniquement accessible avec les premières données de fonctionnement comprend un centre de mise à jour.

8. L'appareil de communication selon l'une quelconque des revendications précédentes, comprenant en outre :
un haut-parleur (7).

9. L'appareil de communication selon l'une quelconque des revendications précédentes, comprenant en outre :
un microphone (6).

10. L'appareil de communication selon l'une quelconque des revendications précédentes, dans lequel l'appareil de communication (20) est configuré pour couper les premières données de fonctionnement de l'utilisation avant de communiquer avec le réseau (21) en utilisant les secondes données de fonctionnement.

11. L'appareil de communication selon l'une quelconque des revendications précédentes, comprenant en outre :
un premier bloc radio (13) configuré pour communiquer avec le réseau (21) par le biais de l'antenne (15).

12. L'appareil de communication selon la revendication 11, comprenant en outre :
une antenne supplémentaire (14) ; et
un second bloc radio (3) configuré pour communiquer avec l'appareil externe (30) par la liaison radio à courte portée (23).

13. L'appareil de communication selon la revendication 12, comprenant en outre :
un microprocesseur (1) couplé entre le premier bloc radio (13), le second bloc radio (3), la mémoire (8) et la carte de fonctionnement (2).

## Patentansprüche

1. Kommunikationsvorrichtung (20) eingerichtet zum Kommunizieren mit einer externen Vorrichtung (30) über eine Kurzreichweitenfunkverbindung (23) und umfassend ein zellulares Funkendgerät, wobei die Kommunikationsvorrichtung (20) umfasst:
eine Funktionskarte (2), die eingerichtet ist, um erste Funktionsdaten für die Kommunikationsvorrichtung (20) zu speichern,
einen Speicher (8), der eingerichtet ist, um zweite Funktionsdaten zu speichern, die von der externen Vorrichtung (30) über die Kurzreichweitenfunkverbindung (23) empfangen werden; und
eine Antenne (15), die eingerichtet ist, um mit einem Netz (21) unter Verwendung der zweiten Funktionsdaten zu kommunizieren, die in dem Speicher (8) gespeichert sind, wobei die Kommunikationsvorrichtung (20) eingerichtet ist, die zweiten Funktionsdaten der externen Vorrichtung (30) wieder zuzuweisen im Falle eines Kommunikationsversuchs mit einem Korrespondent, auf den nur mit den ersten Funktionsdaten der Kommunikationsvorrichtung (20) zugegriffen werden kann.

2. Kommunikationsvorrichtung nach Anspruch 1, wobei die Kurzreichweitenfunkverbindung (23) eine Bluetooth-Verbindung umfasst.

3. Kommunikationsvorrichtung nach einem der vorangegangenen Ansprüche, wobei die Kommunikationsvorrichtung (20) in einem Fahrzeug installiert ist.

4. Kommunikationsvorrichtung nach einem der vorangegangenen Ansprüche, wobei die Funktionskarte (2) eine Sim-Karte umfasst.

5. Kommunikationsvorrichtung nach einem der vorangegangenen Ansprüche, weiter umfassend:
eine zusätzliche Antenne (14), die eingerichtet ist, um die zweiten Funktionsdaten der externen Vorrichtung (30) über die Kurzreichweitenfunkverbindung (23) zu empfangen.

6. Kommunikationsvorrichtung nach einem der vorangegangenen Ansprüche, wobei das Netz (21) ein zellulares Mobilfunknetz umfasst.

7. Kommunikationsvorrichtung nach einem der vorangegangenen Ansprüche, wobei der Korrespondent, auf den nur mit den ersten Funktionsdaten zugegriffen werden kann, ein Aktualisierungszentrum umfasst.

8. Kommunikationsvorrichtung nach einem der vorangegangenen Ansprüche, weiter umfassend:
einen Lautsprecher (7).

9. Kommunikationsvorrichtung nach einem der vorangegangenen Ansprüche, weiter umfassend:
ein Mikrofon (6).

10. Kommunikationsvorrichtung nach einem der vorangegangenen Ansprüche, wobei die Kommunikationsvorrichtung (20) eingerichtet ist, um die ersten Funktionsdaten von der Verwendung abzuschneiden vor dem Kommunizieren mit dem Netz (21) unter Verwendung der zweiten Funktionsdaten.

11. Kommunikationsvorrichtung nach einem der vorangegangenen Ansprüche, weiter umfassend:
eine erste Funkeinheit (13), die eingerichtet ist, um mit dem Netz (21) über die Antenne (15) zu kommunizieren.

12. Kommunikationsvorrichtung nach Anspruch 11, weiter umfassend:
eine zusätzliche Antenne (14); und
eine zweite Funkeinheit (3), die eingerichtet ist, um mit der externen Vorrichtung (30) über die Kurzreichweitenfunkverbindung (23) zu kommunizieren.

13. Kommunikationsvorrichtung nach Anspruch 12, weiter umfassend:
einen Mikroprozessor (1), der zwischen die erste Funkeinheit (13), die zweite Funkeinheit (3), den Speicher (8) und die Funktionskarte (2) gekoppelt ist.

## Claims

1. A communications apparatus (20) that is configured to communicate with an external apparatus (30) over a short range radio link (23), wherein the communications apparatus comprises a cellular radiotelephony terminal, the communications apparatus (20) comprising:
an operating card (2) that is configured to store first operating data for the communications apparatus (20),
a memory (8) that is configured to store second operating data received from the external apparatus (30) over the short range radio link (23); and
an antenna (15) that is configured to communicate with a network (21) using the second operating data stored on the memory (8), wherein the communications apparatus (20) is configured to reallocate the second operating data to the external apparatus (30) in case of a communication attempt with a correspondent that is only accessible with the first operating data of the communications apparatus (20).

2. The communications apparatus defined in claim 1, wherein the short range radio link (23) comprises a Bluetooth link.

3. The communications apparatus defined in any one of the preceding claims, wherein the communications apparatus (20) is installed in a motor vehicle.

4. The communications apparatus defined in any one of the preceding claims, wherein the operating card (2) comprises a SIM card.

5. The communications apparatus defined in any one of the preceding claims, further comprising:
an additional antenna (14) that is configured to receive the second operating data from the external apparatus (30) over the short range radio link (23).

6. The communications apparatus defined in any one of the preceding claims, wherein the network (21) comprises a cellular telephone network.

7. The communications apparatus defined in any one of the preceding claims, wherein the correspondent that is only accessible with the first operating data comprises an update center.

8. The communications apparatus defined in any one of the preceding claims, further comprising:
a speaker (7).

9. The communications apparatus defined in any one of the preceding claims, further comprising:
a microphone (6).

10. The communications apparatus defined in any one of the preceding claims, wherein the communications apparatus (20) is configured to cut off the first operating data from use prior to communicating with the network (21) using the second operating data.

11. The communications apparatus defined in in any one of the preceding claims, further comprising:
a first radio unit (13) that is configured to communicate with the network (21) over the antenna (15).

12. The communications apparatus defined in claim 11, further comprising:
an additional antenna (14); and
a second radio unit (3) that is configured to communicate with the external apparatus (30) over the short range radio link (23).

13. The communications apparatus defined in claim 12, further comprising:
a microprocessor (1) coupled between the first radio unit (13), the second radio unit (3), the memory (8), and the operating card (2).
